# EUROPÄISCHE PATENTSCHRIFT

(11) **EP 1 329 597 B1**
(45) Veröffentlichungstag und Bekanntmachung des Hinweises auf die Patenterteilung: **04.05.2011**
(21) Anmeldenummer: 02000641.7
(22) Anmeldetag: 11.01.2002
(51) Int. Cl.: F01M 11/03, F01M 11/00

(54) **Saugölfilter für Getriebe oder Motoren mit beweglicher Ansaugtube**
Oil filter for transmission or combustion engine with mobile tube
Filtre d'alimentation en huile pour une transmission ou un moteur à combustion interne avec un tube mobile d'alimentation

(43) Veröffentlichungstag der Anmeldung: 23.07.2003
(73) Patentinhaber: IBS Filtran Kunststoff-/Metallerzeugnisse GmbH, 51589 Morsbach (DE)
(72) Erfinder: Beer, Markus, 51597 Morsbach (DE); Rosendahl, Marco, 51597 Morsbach (DE)
(74) Vertreter: Polypatent

(56) Entgegenhaltungen:
- DE-A- 3 022 443
- DE-A- 10 003 710
- DE-B- 1 113 610
- US-A- 3 017 898
- US-A- 3 727 725
- US-A- 4 056 168

## Beschreibung

Gegenstand der Erfindung ist ein Saugölfilter für Getriebe oder Motoren, mit einer Oberschale 1, einer Unterschale 2, mit einer Öleinlassöffnung 3, die sich in der Unterschale 2 befindet, und einem Ölauslass 4, wobei der Saugölfilter in einer Ölwanne oder im Getriebegehäuse angeordnet ist.

Saugölfilter werden heute üblicherweise in Automatikgetrieben zur Filtrierung des Getriebeöls verwendet. Saugölfilter werden auf unterschiedliche Weise im Getriebe eingebaut. Üblicherweise werden die Filter am darüber liegenden Steuergerät oder am Getriebegehäuse angeschraubt und der Filter ist dabei meist an der Unterseite des Getriebegehäuses positioniert. Es gibt auch weitere Anwendungen, bei denen der Saugölfilter in die Ölwanne oder innerhalb des Getriebegehäuses integriert ist. Zur Befestigung des Saugölfilters wird zunächst der Ölfilterauslass in eine entsprechende Getriebeöffnung mittels einer Dichtung eingeschoben und anschließend die Ölwanne oder die Getriebehälften montiert. Bei diesen Anwendungen wird der Filter ausschließlich durch die Ölwanne bzw. Getriebehälften und durch die Befestigung und Fixierung am Ölauslass in seiner Position gehalten. Teilweise werden in der Ölwanne Federn eingesetzt, um die Position des Saugölfilters im Getriebe konstant zu halten.

Durch diese Anordnung ergeben sich jedoch erhebliche Nachteile, insbesondere im Betrieb und bei der Befestigung der Saugölfilter. Zunächst besteht die Möglichkeit, dass sich der Saugölfilter während des Betriebes in seiner Ansaugposition aufgrund der gegebenen Toleranzen verschiebt, so dass es hier zu Änderungen im Getriebeölfluss kommen kann. Dies spielt insbesondere eine Rolle für das Ölvolumen. Dieses muss nämlich so gehalten werden, dass die Ansaugposition des Saugölfilters in jeder Fahrzeuglage immer vollständig unterhalb des Ölspiegels liegt. Da aufgrund der durch die Befestigung entstehenden Toleranzen und Verschiebemöglichkeiten das Ölvolumen variiert, muss aus funktionellen Gründen eine größere Menge Öl im Kreislauf gehalten werden. Dies ist aufwendig und verursacht an anderen funktionswichtigen Getriebebauteilen zusätzlich technische Probleme und Kosten.

Hinzu kommt, dass neuere Getriebe, wie beispielsweise CVT-Getriebe, deren hydraulische Regelung elektronisch oder auch druckabhängig erfolgt, sehr empfindlich reagieren auf Druckschwankungen oder falsches Ansaugen von Luft, die bei der Ölfiltration mit den herkömmlich befestigten Saugölfiltern aufgrund von Verschiebungen oder Toleranzen entstehen können. Hierdurch kann es bereits zu Fehlfunktionen in der hydraulischen Regelung der CVT-Getriebe kommen oder sogar zum Getriebeausfall durch Versagen der hydraulischen Regelung.

Aus der DE 100 03 710 A1 ist ein Saugölfilter mit den eingangs genannten Merkmalen bekannt. Aus der US 3,727,725 A und der DE 30 22 443 A1 sind Ansaugeinrichtungen mit einem darin angeordneten Filterelement zur Anordnung in einer Ölwanne bekannt, wobei das Saugende durch ein daran fixiertes Distanzstück beabstandet zum Innenboden der Ölwanne angeordnet ist.

Die technische Aufgabe der Erfindung ist es, einen Saugölfilter mit den eingangs genannten Merkmalen bereits zu stellen, bei dem gewährleistet ist, dass die Ansaugposition immer vollständig unterhalb des Ölspiegels liegt.

Diese technische Aufgabe wird durch die kennzeichnenden Merkmale des Anspruchs 1 gelöst. Die vom Anspruch 1 abhängigen Ansprüche betreffen bevorzugte Ausführungsformen.

Erfindungsgemäß wird ein Saugölfilter zur Verfügung gestellt, der so in der Ölwanne oder im Getriebe angeordnet ist, dass ein definierter Abstand zwischen Ölansaugöffnung und Ölwannenboden oder Getriebegehäuse gewährleistet ist, so dass die Toleranzen des notwendigen Ölstromes verringert werden können und ein gleichmäßiger Ölstrom und eine fehlerfreie Funktion gewährleistet ist.

Es wird ein Saugölfilter für Getriebe oder Motoren vorgeschlagen, bei dem in der Ansaugöffnung 3 eine bewegliche Ansaugtube 5 angeordnet ist, die durch auf der Innenseite der Ansaugtube 5 gelagerte Federmittel 6 nach außen auf den Ölwannenboden 8 gedrückt wird und so eine Ölansaugöffnung 3' mit definiertem konstanten Abstand zum Ölwannenboden oder Getriebegehäuse geschaffen wird.

Dabei kann der Saugölfilter in einer Ölwanne angeordnet sein. Es besteht aber auch die Möglichkeit, den Saugölfilter direkt im Getriebegehäuse anzuordnen. Dann ist keine Ölwanne notwendig, da das Getriebegehäuse die Funktion der Ölwanne übernimmt.

In einer bevorzugten Ausführungsform ist das Federmittel eine Feder, die auf die bewegliche Ansaugtube 5 drückt und so die Ansaugtube vorspannt. Die Ölansaugöffnung 3 befindet sich in der Unterschale 2 des Saugölfilters. Die Ansaugtube 5 besitzt in bevorzugter Ausführungsform an ihrer Außenseite einen oder mehrere Abstandshalter 7, die ganz besonders bevorzugt zapfenförmig sein können. Wenn der Saugölfilter in der Ölwanne oder im Getriebegehäuse montiert ist, steht die Ansaugtube mit diesen Zapfen auf dem Ölwannenboden bzw. im Getriebegehäuse, wobei die Ansaugtube 5 mittels der Feder gegen den Boden bzw. das Getriebegehäuse gedrückt wird. Hierdurch wird ein definierter Abstand zwischen Ansaugöffnung und Ölwannenboden bzw. Getriebegehäuse geschaffen, der auch in Bewegung des Kraftfahrzeuges und unabhängig von der Viskosität des Öls oder etwaiger Erschütterungen und Fahrsituationen immer konstant bleibt.

Die Ansaugtube besitzt in einer weiteren bevorzugten Ausführungsform auf ihrer Innenseite einen weiteren Feder-Führungszapfen 9, auf dem das eine Ende der Feder 6 gelagert ist. Das andere Ende der Feder 6 wird in bevorzugter Ausführungsform gegen die Oberschale des Saugölfilters oder Zapfen der Oberschale gelagert.

Die Ansaugtube 5 verfügt weiterhin über Dichtungsmittel 10, so dass eine Abdichtung des äußeren Randes der Ansaugtube gegenüber dem inneren Rand der Ansaugöffnung gewährleistet ist und der Ölfluss ausschließlich durch die Ansaugtube erfolgt. Als Dichtungsmittel wird bevorzugt ein O-Ring eingesetzt.

Weiterhin verfügt die Ansaugtube 5 an ihrem oberen Ende über eine durchgehend oder unterbrochen umlaufende Verdickung 11, so dass die Ansaugtube nicht nach unten aus der Ansaugöffnung herausrutschen kann. Im nicht eingebauten Zustand wird die Ansaugtube durch die in dem Saugölfilter angeordnete Feder maximal nach außen gedrückt, bis die umlaufende Verdickung auf den Rand des Ölwannenbodens trifft. Im eingebauten Zustand wird die Ansaugtube 5 teilweise durch den Ölwannenboden bzw. das Getriebegehäuse wieder in das Gehäuse des Saugölfilters hineingedrückt und verbleibt dann unter Spannung in einer definierten Position.

Der Einbau des Saugölfilters in das Getriebe erfolgt in herkömmlicher Weise, in dem dieser zuerst so eingesetzt wird, dass er am Steuergerät oder am der Getriebegehäuse, vorzugsweise der Getriebegehäuseunterseite anliegt. Durch anschließendes Aufsetzen der Ölwanne wird nun die bewegliche Ansaugtube 5 weiter vorgespannt und in eine vordefinierte Lage gedrückt. Über die bevorzugt angeordneten Abstandshalter an der Unterseite der Ansaugtube wird konstruktiv ein konstanter Abstand zwischen Ansaugöffnung und Ölwanne bzw. Getriebegehäuse eingestellt. Des Weiteren wird durch diese Konstruktion der Saugölfilter in der gegebenen Getriebelage fixiert. Es sind keine weiteren Befestigungselemente mehr notwendig.

Der erfindungsgemäße Saugölfilter besitzt gegenüber den Saugölfiltern des Standes der Technik erhebliche Vorteile. Es wird ein definierter, konstanter Abstand der Saugölöffnung zum Ölwannenboden bzw. zum Getriebegehäuse geschaffen. Es erfolgt weiterhin ein Toleranzausgleich der Toleranzen von Getriebegehäuse, Ölwanne, Steuergerät und Saugölfilter. Es ist weiterhin keine zusätzliche Befestigung des Saugölfilters notwendig, und der Saugölfilter ist in dieser Weise sehr einfach zu montieren. Die nachfolgenden Figuren sollen die Erfindung näher erläutern:

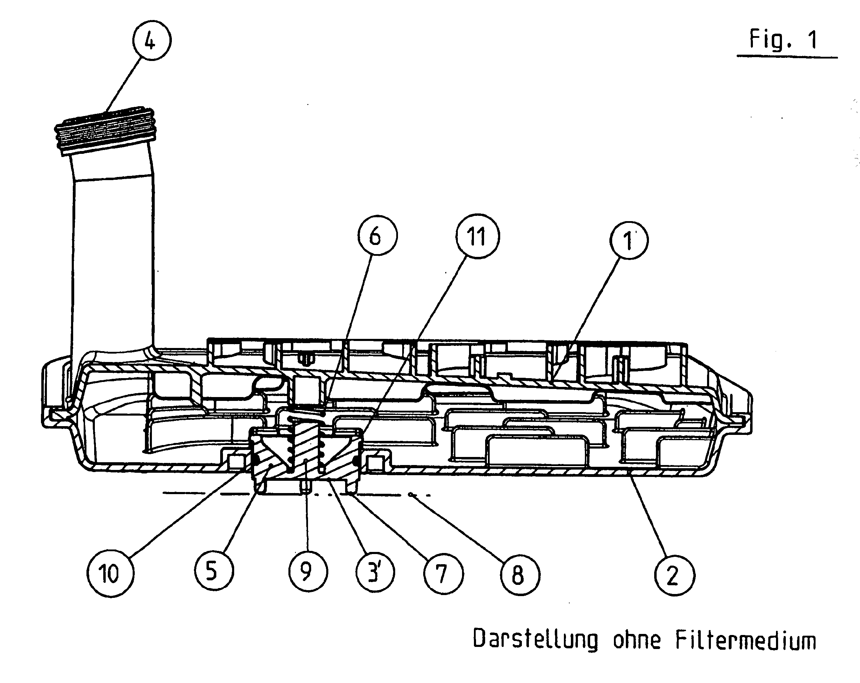

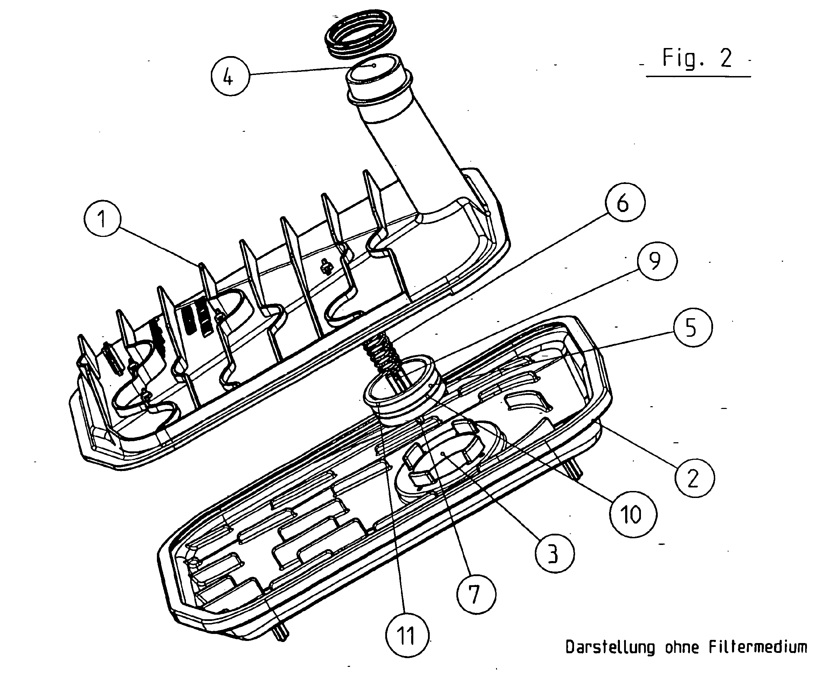

Figur 1 zeigt einen Querschnitt durch die erfindungsgemäße Saugölwanne. Dabei bezeichnen die Ziffern 1 und 2 die Oberschale bzw. die Unterschale des Saugölfilters, die Ziffer 3' die Ölansaugöffnung, die den Öleinlass darstellt und die Ziffer 4 den Ölauslass. Mit der Ziffer 5 ist die beweglich gelagerte Ansaugtube bezeichnet, die gegenüber der Unterschale mittels einer Dichtung 10 abgedichtet ist, so dass das Öl nur durch das Innere der Ansaugtube in den Filter gelangen kann. Die Ansaugtube verfügt weiterhin auf der Innenseite über einen Zapfen 9, über den die Feder 6 gelagert ist. Diese drückt auf der anderen Seite gegen die Oberschale 1 oder Rippen der Oberschale. Die Ansaugtube besitzt auf ihrer Unterseite einen oder mehrere Abstandshalter 7, die im eingebauten Zustand auf dem Ölwannenboden bzw. dem Getriebegehäuse stehen und somit einen definierten Abstand zwischen Ansaugöffnung 3' und Ölwannenboden bzw. Getriebegehäuse gewährleisten. Die Ansaugtube 5 verfügt weiterhin am oberen Teil über eine vollständig oder unterbrochen umlaufende Verdickung 11, die dafür sorgt, dass im ausgebauten Zustand die Ansaugtube nicht aus der Ansaugöffnung herausfällt. Figur 2 zeigt eine Explosionsdarstellung des erfindungsgemäßen Saugölfilters mit der Oberschale 1, der Unterschale 2, einer Öleinlassöffnung 3 und dem Öllauslass 4. Mit der Ziffer 5 ist die Ansaugtube bezeichnet. Weiterhin ist mit der Ziffer 10 der O-Ring erkennbar und die am unteren Ende der Ansaugtube angeordneten Abstandshalter 7.

## Patentansprüche

1. Saugölfilter für Getriebe oder Motoren mit einer Oberschale (1), einer Unterschale (2), einer Öleinlassöffnung (3), die sich in der Unterschale (2) befindet, und einem Ölauslass (4), wobei der Saugölfilter in einer Ölwanne oder im Getriebegehäuse angeordnet ist,
**dadurch gekennzeichnet, dass**
in der Öleinlassöffnung (3) eine zur Unterschale (2) relativ-bewegliche Ansaugtube (5) mit einer Ansaugöffnung (3') angeordnet ist, durch die der Ölfluss erfolgt, wobei die Ansaugtube (5) mittels auf ihrer Innenseite gelagerter Federmittel (6) nach außen auf den Ölwannenboden (8) oder das Getriebegehäuse gedrückt wird und an ihrer Außenseite einen oder mehrere Abstandshalter (7) besitzt, so dass ein definierter konstanter Abstand zwischen der Ansaugöffnung (3') und dem Ölwannenboden (8) oder Getriebegehäuse geschaffen wird.

2. Saugölfilter nach Anspruch 1,
**dadurch gekennzeichnet, dass**
das Federmittel eine Feder ist.

3. Saugölfilter nach Anspruch 1 oder 2,
**dadurch gekennzeichnet, dass**
die Abstandshalter (7) ein oder mehrere Zapfen sind.

4. Saugölfilter nach einem der Ansprüche 2 oder 3,
**dadurch gekennzeichnet, dass**
die Ansaugtube (5) auf ihrer Innenseite einen weiteren Zapfen (9) besitzt, auf dem das eine Ende der Feder (6) gelagert ist.

5. Saugölfilter nach Anspruch 4,
**dadurch gekennzeichnet, dass**
das andere Ende der Feder (6) gegen die Oberschale (1) oder Zapfen der Oberschale (1) gelagert ist.

6. Saugölfilter nach einem der Ansprüche 1 bis 5,
**dadurch gekennzeichnet, dass**
die Ansaugtube (5) über Dichtungsmittel (10) verfügt, die den äußeren Rand der Ansaugtube (5) gegenüber dem inneren Rand der Oleinlassöffnurig (3) abdichten.

7. Saugölfilter nach Anspruch 6,
**dadurch gekennzeichnet, dass**
das Dichtungsmittel (10) ein O-Ring ist.

8. Saugölfilter nach einem der Ansprüche 1 bis 7,
**dadurch gekennzeichnet, dass**
die Ansaugtube (5) an ihrem oberen Ende eine vollständig oder unterbrochen umlaufende Verdickung (11) besitzt, so dass die Ansaugtube (5) nicht aus der Öleinlassöffnung (3) nach unten herausrutschen kann.

## Claims

1. Suction oil filter for transmissions or engines, with an upper shell (1), a lower shell (2), an oil inlet aperture (3) which is located in said lower shell (2), and an oil outlet (4), wherein the suction oil filter is disposed in an oil sump or in the transmission housing,
**characterised in that** there is disposed in the oil inlet aperture (3) an intake tube (5) which is movable relative to the lower shell (2) and has an intake aperture (3') through which the flow of oil takes place, the intake tube (5) being pressed outwards, by means of spring means (6) resting on its inner side, onto the bottom (8) of the oil sump or onto the transmission housing, and possessing one or more spacers (7) on its outer side, so that a defined constant clearance is produced between the intake aperture (3') and the bottom (8) of the oil sump or the transmission housing.

2. Suction oil filter according to claim 1, **characterised in that**
the spring means is a spring.

3. Suction oil filter according to claim 1 or 2, **characterised in that**
the spacers (7) are one or more pegs.

4. Suction oil filter according to either of claims 2 or 3,
**characterised in that**
the intake tube (5) possesses, on its inner side, a further peg (9) on which one end of the spring (6) rests.

5. Suction oil filter according to claim 4, **characterised in that**
the other end of the spring (6) rests against the upper shell (1) or the peg on said upper shell (1).

6. Suction oil filter according to one of claims 1 to 5, **characterised in that**
the intake tube (5) has sealing means (10) which seal the outer rim of said intake tube (5) in relation to the inner rim of the oil inlet aperture (3).

7. Suction oil filter according to claim 6, **characterised in that**
the sealing means (10) is an O-ring.

8. Suction oil filter according to one of claims 1 to 7, **characterised in that**
the intake tube (5) possesses a completely or interruptedly circumferential thickening (11) at its upper end, so that said intake tube (5) cannot slip out of the oil inlet aperture (3) in the downward direction.

## Revendications

1. Filtre d'aspiration d'huile pour boîtes de vitesses ou moteurs, comportant une coque supérieure (1), une coque inférieure (2), une ouverture d'admission d'huile (3), qui se situe dans la coque inférieure (2), et une sortie d'huile (4), le filtre d'aspiration d'huile étant disposé dans un carter d'huile ou dans le carter de la boîte de vitesses,
**caractérisé en ce que** dans l'ouverture d'admission d'huile (3) est disposé un tube d'aspiration (5) mobile par rapport à la coque inférieure (2) et muni d'une ouverture d'aspiration (3'), à travers laquelle afflue l'huile, le tube d'aspiration (5) étant poussé, par un moyen à ressort (6) monté sur la face intérieure de ce dernier, vers l'extérieur sur le fond (8) du carter d'huile ou sur le carter de boîte de vitesses, et comportant sur sa face extérieure un ou plusieurs écarteurs (7), de manière à maintenir une distance constante définie entre l'ouverture d'aspiration (3') et le fond (8) du carter d'huile ou le carter de la boîte de vitesses.

2. Filtre d'aspiration d'huile selon la revendication 1, **caractérisé en ce que** le moyen à ressort est un ressort.

3. Filtre d'aspiration d'huile selon la revendication 1 ou 2, **caractérisé en ce que** les écarteurs (7) sont un ou plusieurs tétons.

4. Filtre d'aspiration d'huile selon la revendication 2 ou 3, **caractérisé en ce que** le tube d'aspiration (5) comporte, sur sa face intérieure, un autre téton (9), sur lequel est logée l'une des extrémités du ressort (6).

5. Filtre d'aspiration d'huile selon la revendication 4, **caractérisé en ce que** l'autre extrémité du ressort (6) est montée contre la coque supérieure (1) ou le téton de la coque supérieure (1).

6. Filtre d'aspiration d'huile selon l'une quelconque des revendications 1 à 5, **caractérisé en ce que** le tube d'aspiration (5) comporte des moyens d'étanchéité (10) qui assurent l'étanchéité entre le bord extérieur du tube d'aspiration (5) et le bord intérieur de l'ouverture d'admission d'huile (3).

7. Filtre d'aspiration d'huile selon la revendication 6, **caractérisé en ce que** le moyen d'étanchéité (10) est un joint torique.

8. Filtre d'aspiration d'huile selon l'une quelconque des revendications 1 à 7, **caractérisé en ce que** le tube d'aspiration (5) comporte, sur son extrémité supérieure, un renflement (11) périphérique continu ou interrompu, de telle sorte que le tube d'aspiration (5) ne peut pas glisser vers le bas hors de l'ouverture d'admission d'huile (3) .
